Europäisches Patentamt

European Patent Office

Office européen des brevets

(19)

(11) Veröffentlichungsnummer: **0 214 367**
**B1**

(12) **EUROPÄISCHE PATENTSCHRIFT**

(45) Veröffentlichungstag der Patentschrift:
02.08.89

(21) Anmeldenummer: 86105567.1

(22) Anmeldetag: 22.04.86

(51) Int. Cl.⁴: **F 16 K 24/04,** F 16 L 55/07,
F 15 D 1/02, F 16 T 1/45,
B 01 D 19/00, F 28 F 9/00,
F 02 M 55/00, F 22 D 1/00

(54) Entlüftungsvorrichtung.

(30) Priorität: 03.05.85 DE 3515936

(43) Veröffentlichungstag der Anmeldung:
18.03.87 Patentblatt 87/12

(45) Bekanntmachung des Hinweises auf die Patenterteilung:
02.08.89 Patentblatt 89/31

(84) Benannte Vertragsstaaten:
BE CH DE FR GB IT LI NL SE

(56) Entgegenhaltungen:
DE-A-2 447 316
DE-A-2 946 368
DE-A-3 012 078
US-A-2 713 973
US-A-3 344 587
US-A-3 610 538
US-A-3 814 123

(73) Patentinhaber: Deutsche Vortex GmbH, Erkelenzer
Strasse 34, D-4050 Mönchengladbach 5 (DE)

(72) Erfinder: Kühl, Hans- Dieter, Rozenbergstrasse 12,
D-7121 Mundelsheim (DE)
Erfinder: Schmidt, Hans- Dieter,
Wunnensteinstrasse 16/3, D-7148 Remseck 3 (DE)

(74) Vertreter: Möhrke, Dieter, Dipl.- Ing.,
Blumenberger Strasse 143/145, D-4050
Mönchengladbach 1 (DE)

## Beschreibung

Die Erfindung betrifft eine Entlüftungsvorrichtung für ein gasbefrachtetes, strömendes flüssiges Medium, versehen mit einer vorzugsweise automatisch entlüftbaren, nach unten hin geöffneten Gassammelkammer entsprechend den Angaben im Oberbegriff von Anspruch 1, die aus der US-A-3 344 587 bekannt sind.

In der US-A-3 344 587 wird eine Anlage zum Entgasen größerer Flüssigkeitsmengen im Durchflußverfahren vorgestellt. Die Vorrichtung besteht aus einem aufrechtstehenden, doppelwandigen, zylinderförmigen Behälter, in dessen Boden aufrechtstehend ein in den Seitenwänden perforiertes Rohr eingeführt ist, dessen Öffnung durch eine Platte verschlossen ist. Die zu entgasende Flüssigkeit strömt durch dieses Rohr ein und füllt den von der inneren Wand umgebenden Teil des Behälters, wobei diese innere zylinderförmige Wand mit einem größeren Abstand vor der Kopfseite des Behälters endet. Während des Aufsteigens entgast die Flüssigkeit, das Gas sammelt sich unterhalb der Kopfplatte. Die entgaste Flüssigkeit fließt über den Rand der inneren Wand über und läuft zwischen Außenwand und innerer Wand zu dem bodenseitig angebrachten Abfluß. Übersteigt die angesammelte Gasmenge am Kopf des Behälters einen gewissen Wert, das heißt, sinkt der Flüssigkeitsspiegel unter eine bestimmte Marke, wird automatisch über ein Ventil entlüftet, das durch einen Schwimmer gesteuert wird.

Diese Vorrichtung wird diskontinuierlich eingesetzt, da sie für das Umpumpen größerer Flüssigkeitsmengen von einem Behälter in einen anderen vorgesehen ist. Zu- und Abfluß sind nicht lageveränderbar. Außerdem ist es für die Unterstützung der Entgasung erforderlich, ständig zusätzlich Druckgas in den Behälter einzuführen.

In der US-A-2 713 973 wird eine Entgasungskammer für Heizungssysteme vorgestellt. Die zu entgasende Flussigkeit durchströmt eine horizontal angeordnete Kammer, die horizontal durch ein Blech mit speziell angeordneten Öffnungen geteilt wird. Da die Luftblasen dazu neigen, nach oben zu steigen, werden sie mit Hilfe des Lochblechs von dem oberen Teil des die Kammer durchströmten Hauptstromes abgeschöpft und in den oberen Teil der Kammer geleitet, von wo sie in eine Gassammelkammer aufsteigen.

Bei einer solchen Entgasungskammer können nicht alle Gasblasen aus dem die Kammer durchströmenden Wasser ausgesondert werden, da nur die in der obersten Schicht des Stromes befindlichen Gasblasen erfaßt werden. Zu- und Abfluß der Entgasungskammer müssen immer waagerecht angeordnet sein.

Der Erfindung liegt die Aufgabe zugrunde, die gattungsgemäße Entlüftungsvorrichtung so weiterzubilden, daß sie besonders effektiv arbeitet.

Gemäß der Erfindung wird diese Aufgabe durch die im Anspruch 1 enthaltenen Merkmale gelöst.

Das angesammelte Gas kann von Zeit zu Zeit entweder durch Handbetätigung oder automatisch abgelassen werden. Hierzu ist beispielsweise eins der bekannten Schwimmerventile verwendbar.

Vor dem Ende des Diffusors, das heißt in Strömungsrichtung vorn, ist mit Abstand von diesem eine Prallfläche angeordnet. Diese Prallfläche kann beispielsweise zugleich die Gehäusewand sein. Auch eine solche Prallfläche erleichtert das Bilden der Gasblasen.

Es ist vorgesehen, daß das Medium zwischen Diffusor einerseits und umgebendem Raum andererseits durch eine die Strömungsgeschwindigkeit heraufsetzende Engstelle geleitet wird.

Nach einer weiteren Ausbildung der Erfindung ist vorgesehen, daß die Wandöffnungen des Diffusors als Längsschlitze ausgebildet sind. Längsschlitze haben ganz bestimmte Vorteile, wie später noch erläutert wird.

Nach einer weiteren Ausbildung der Erfindung dient der den Diffusor umgebende Raum der Rückleitung des Mediums im Gegenstrom. Dieser Raum besitzt zumindest abströmseitig einen größeren Strömungsquerschnitt als der Diffusor. Dieser Raum kann vorteilhaft als Ringdiffusor ausgebildet sein. Eine solche Ausbildung ergibt sich zwanglos dann, wenn das Gehäuse der Entlüftungsvorrichtung zylindrisch ist. Die Vorteile, die der innere Diffusor besitzt, zeichnen auch den äußeren Ringdiffusor aus.

Die Engstelle befindet sich beispielsweise zwischen Diffusorrand einerseits und Prallfläche andererseits. Vorteilhaft befindet sich die Engstelle an der Einströmseite des Ringdiffusors. Die Einströmseite des Ringdiffusors kann beispielsweise einen wesentlich kleineren Strömungsquerschnitt haben als die Ausströmseite des inneren Diffusors.

Vorteilhaft weist der den Diffusor umgebende Raum beziehungsweise Ringdiffusor an der Abströmseite eine Prallwand auf. Auch diese Prallwand dient dem Bilden der Gasblasen und dem Zusammenfließen kleinerer Gasblasen zu größeren, so daß die Entlüftung effektiver wird. Vorteilhaft schließt die Prallwand den Raum beziehungsweise Ringdiffusor ab und weist in ihrem unteren Bereich mindestens eine Öffnung für das abströmende Medium auf, deren Lage so gewählt ist, daß sie von Luftblasen nur gegen den Widerstand ihrer Auftriebskräfte passiert werden kann. Während die Luftblasen nach oben wandern, strömt das Medium vorteilhaft mit geringer Strömungsgeschwindigkeit nach unten, um zu der Abströmöffnung zu gelangen.

Um die erfindungsgemäße Entlüftungsvorrichtung an Rohrleitungsführungen und hydraulische Anlagen und Systeme aller Art besser anpassen zu können, ist nach einer weiteren Ausbildung der Erfindung vorgesehen, daß ein Einlaßelement und/oder ein Auslaßelement für das Medium relativ zum Gehäuse der Entlüftungsvorrichtung lageveränderbar angeordnet ist. Hierdurch wird ermöglicht, das Medium in wählbarer Richtung ein- und ausströmen zu lassen, dabei aber die Gassammelkammer immer in der gewünschten Lage über den Gasabscheidemitteln zu halten.

Nach einer weiteren Ausbildung der Erfindung weist das Gehäuse der Entlüftungsvorrichtung abströmseitig einen mit einem ringförmigen Dichtrand versehenen Ringraum auf, in dem einströmseitig der Diffusor konzentrisch angeordnet ist. Einlaßelement und Auslaßelement besitzen hierbei ein gemeinsames Gehäuse, das einen zum Dichtrand des Gehäuses der Entlüftungsvorrichtung passenden Dichtrand aufweist. Das Einlaßelement schließt mit konzentrischer Passung an den Diffusor an. Das Auslaßelement schließt an den Ringraum an und die Dichtränder beider Gehäuse sind mit wählbarer wechselseitiger Winkelstellung durch Verbindungsmittel miteinander verbunden. Es kommen hierfür unterschiedliche Verbindungsmittel in Frage. Beispielsweise sind Schellen, Verschraubungen und Spannringe oder dergleichen als Verbindungselemente brauchbar. Vorteilhaft ist die Verbindung lösbar

Nach einer weiteren Ausbildung der Erfindung ist das einströmseitige Ende des Diffusors frei drehbar in eine sich im Gehäuse der Einlaß- und Auslaßelemente befindende Bohrung eingepaßt und an seiner Stirnfläche gegen das Gehäuse abgedichtet.

Anhand des in den Zeichnungen dargestellten Ausführungsbeispiels soll die Erfindung näher erläutert und beschrieben werden

Fig. 1 zeigt die Vorderansicht einer erfindungsgemäßen Entlüftungsvorrichtung

Fig. 2 zeigt einen Schnitt durch die Entlüftungsvorrichtung längs der in Fig. 1 gezeichneten Linie II-II.

Die Fig. 3, 4 und 5 zeigen die gleiche Schnittdarstellung bei unterschiedlicher Gasblasenbildung.

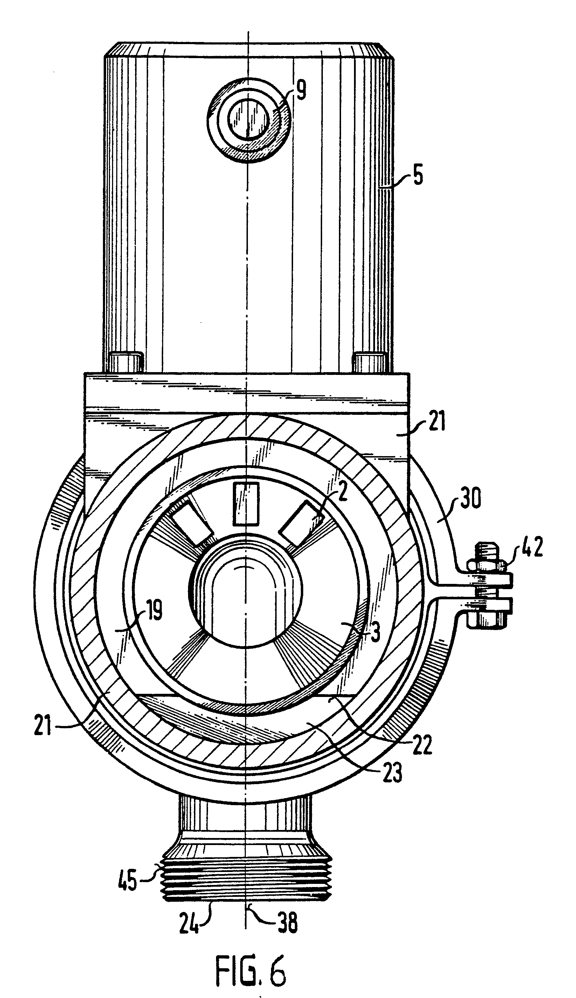

Fig. 6 zeigt einen Schnitt durch die Entlüftungsvorrichtung längs der in Fig. 2 gezeichneten Linie VI-VI.

Fig. 7 zeigt eine Vorderansicht der in Fig. 1 dargestellten Entlüftungsvorrichtung mit um 90 Grad gedrehten Einlaß- und Auslaßelementen

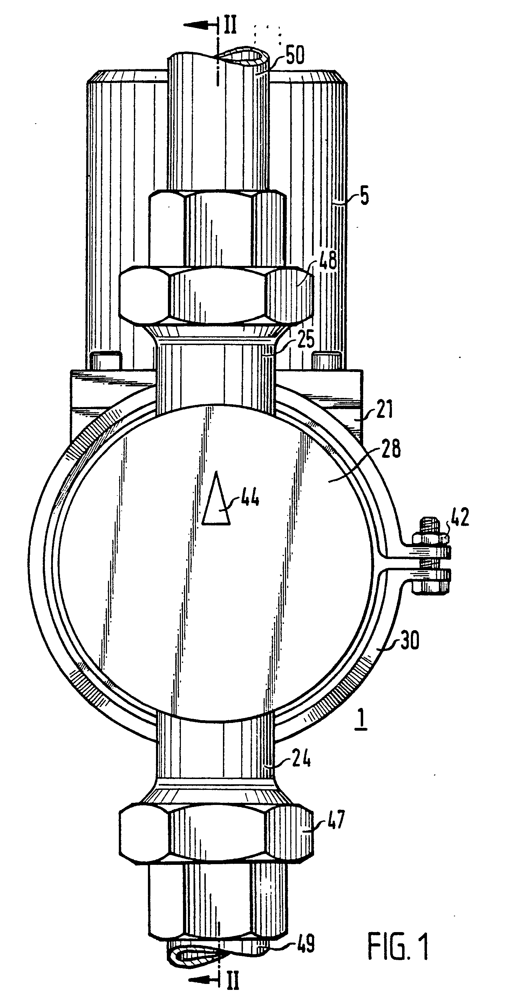

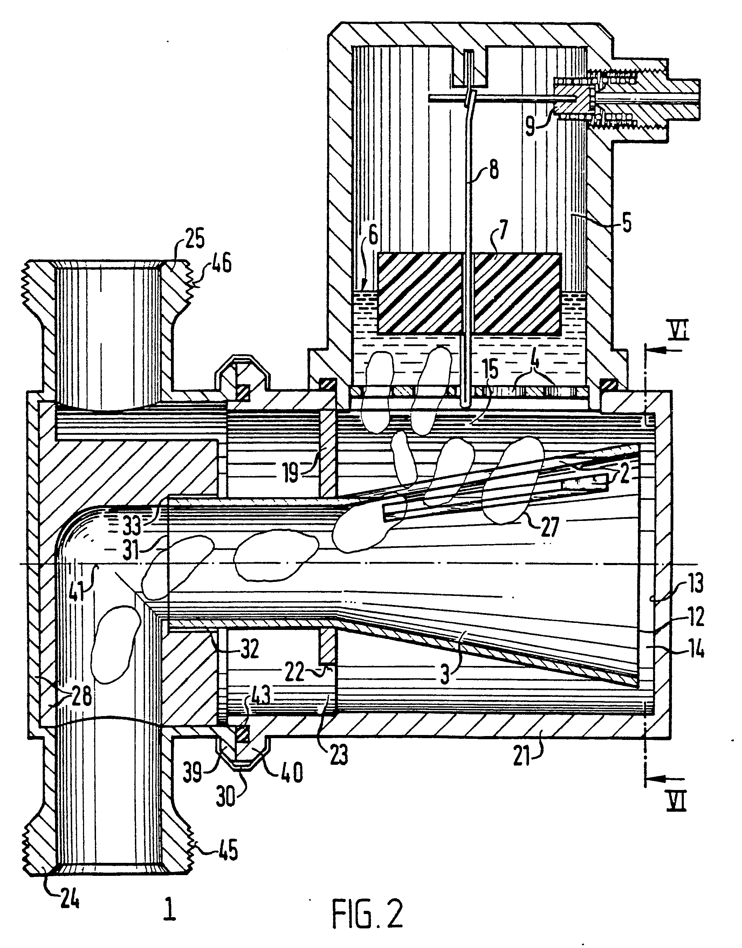

Die in Fig. 1 und 2 insgesamt mit 1 bezeichnete Entlüftungsvorrichtung besitzt einen in seinem oberen Bereich mit Wandöffnungen in Form von drei Längsschlitzen 2 versehenen Diffusor 3, der unterhalb einer Gassammelkammer 5 etwa waagerecht angeordnet ist. Die Wandöffnungen beziehungsweise Längsschlitze 2 sind so groß bemessen, daß Gasblasen 27 durch die Wandöffnungen 2 hindurch nach oben bis in einen den Diffusor 3 umgebenden Raum 15 und von dort in die Gassammelkammer 5 aufsteigbar sind, wie es Fig. 2 zeigt.

Die größeren Gasblasen, die in Fig. 2 angedeutet sind, können bereits mit dem strömenden Medium in den Diffusor 3 gelangen. Sie können aber auch erst dort entstehen, weil im Diffusor sich die Strömungsgeschwindigkeit vermindert. Die Gasblasen 27 gelangen durch Öffnungen 4 im Boden der Gassammelkammer 5 in die Gassammelkammer und das Gas sammelt sich dann oberhalb des Flüssigkeitsspiegels 6 an. In der Gassammelkammer 5 befindet sich ein Schwimmer 7, der über ein Gestänge 8 ein Ventil 9 öffnet, sobald der Flüssigkeitsspiegel 6 soweit gesunken ist, wie es Fig. 2 zeigt. Das Ventil 9 öffnet sich dadurch, daß der Schwimmer 7, der bis dahin am Gestänge 8 abwärts gewandert ist, jetzt beginnt, das Gestänge 8 zu belasten, wodurch ein Verschlußglied des Ventils 9 von seinem Sitz abgehoben wird.

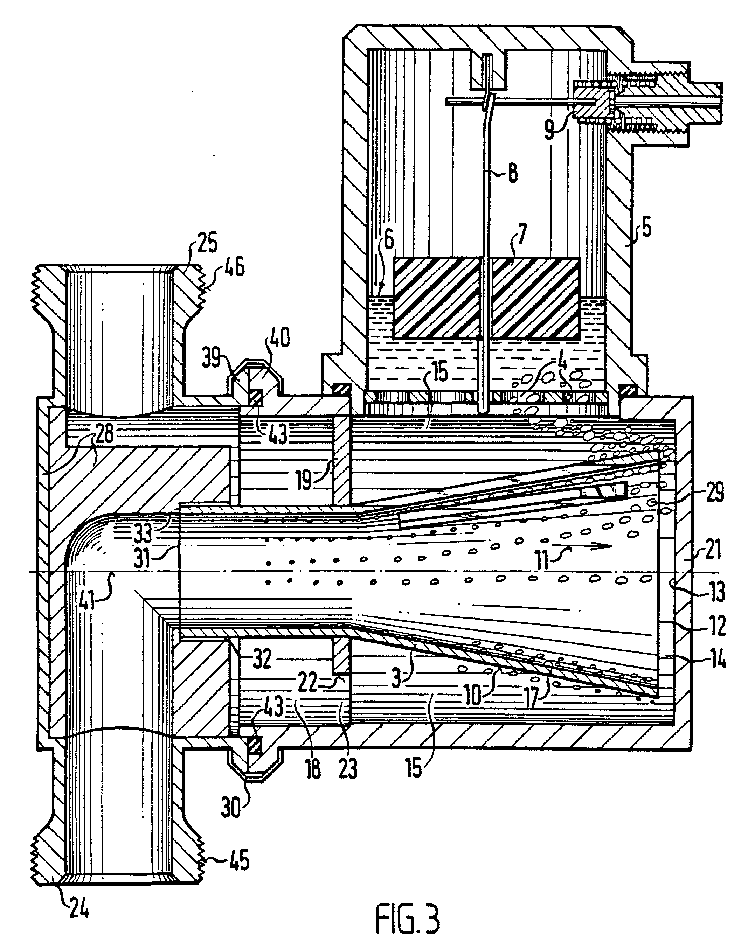

Wenn das gasbefrachtete flüssige Medium gemäß Fig. 3 in Richtung des Pfeils 11 den Diffusor 3 durchströmt, setzen sich infolge des Abreißens der Strömung an der Innenwand 17 des Diffusors 3 Mikroblasen an, die allmählich zu größeren Blasen 29 akkumulieren und in Richtung auf das Diffusorende 12 hin weiterwandern. Vor dem Diffusorende 12 bildet das Gehäuse 21 der Entlüftungsvorrichtung 1 eine Prallfläche 13. Der dort zwischen Diffusorende 12 und Prallfläche 13 gebildete Ringspalt 14 erhöht die Strömungsgeschwindigkeit so, daß die akkumulierten Luftbläschen in den sich anschließenden, den Diffusor 3 umgebenden Raum 15 mitgerissen werden, der die Form eines Ringdiffusors hat. Im Ringdiffusor 15 tritt abermals eine Verzögerung der Strömungsgeschwindigkeit ein, wodurch die akkumulierten Mikroblasen Zeit finden, über die Öffnungen 4 in die Gassammelkammer 5 zu wandern, wie es Fig. 3 zeigt.

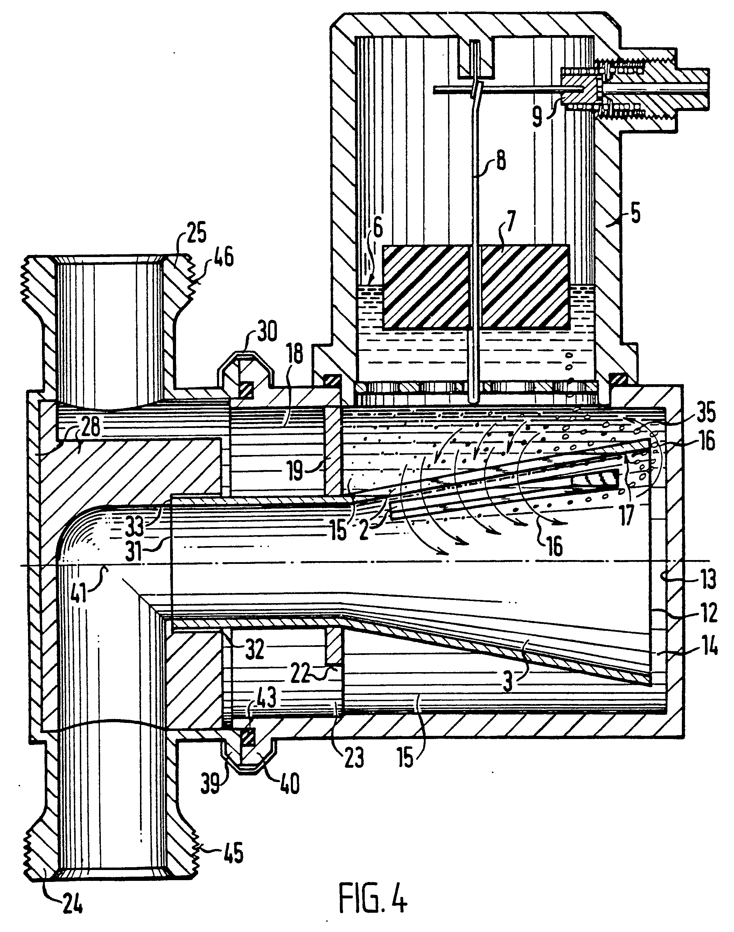

Fig. 4 deutet an, daß diejenigen Mikroblasen 35, die zuwenig Auftrieb besitzen, um in die Gassammelkammer zu gelangen, infolge der durch die Druckdifferenzen zwischen dem Diffusor 3 und dem Ringdiffusor 15 hervorgerufene Zirkulationsströmung 16 durch die Längsschlitze 2 in den Diffusor 3 zurückgeführt werden und sich dabei zum Beispiel an der Innenwand 17 des Diffusors 3 wiederum zu größeren Blasen umbilden, die dann schließlich doch nach nochmaligem Umlauf in die Gassammelkammer 5 gelangen.

Der den Diffusor 3 umgebende Ringdiffusor 15 weist an der Abströmseite eine Prallwand 19 auf. Die Prallwand 19 schließt den Ringdiffusor 15 abströmseitig ab. Sie weist in ihrem unteren Bereich 22 eine Öffnung 23 für das abströmende Medium auf. Die Lage der Öffnung 23 ist so gewählt, daß sie von Gasblasen nur gegen den Widerstand ihrer Auftriebskräfte passiert werden kann.

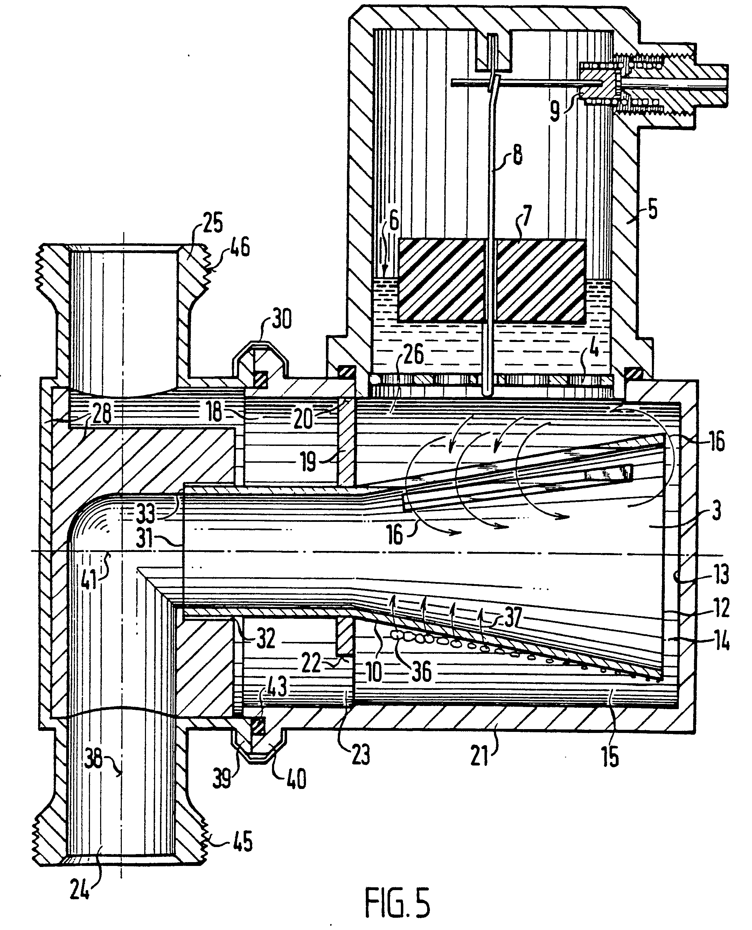

Die Prallwand 19 schließt im übrigen an ihrem Umfang 20 Gasdicht mit dem zylindrischen Gehäuse 21 ab, wie es insbesondere Fig. 5 zeigt. Der freie Querschnitt der Öffnung 23 entspricht aus Kontinuitätsgründen dem Querschnitt des Einlaßelements 24 und dem Querschnitt des Auslaßelements 25. Die Prallwand 19 verhindert, daß bereits aufgestiegene Gasblasen ohne weiteres aus dem in Fig. 5 mit 26 bezeichneten Bereich in den stromab der Prallwand 19 vorhandenen Ringraum 18 gelangen können. Da im Bereich 26 keine orientierte Strömung in Richtung der Öffnung 23 vorhanden ist, werden die sich im Bereich 26 aufhaltenden Mikroblasen von der Zirkulationsströmung 16 erfaßt und in den Diffusor 3 zurückgeführt. Dort können sie wieder zu größeren Blasen akkumulieren, bis sie schließlich ebenfalls in die Gassammelkammer 5 gelangen.

Infolge der sich im Ringdiffusor 15 in Strömungsrichtung vermindernden Strömungsgeschwindigkeit setzen sich auch an der Außenwand 10 des Diffusors 3 gemäß Fig. 3 und Fig. 5 Mikroblasen an, die zu größeren Blasen 36 akkumulieren und dann um den Diffusor 3 herum gemäß Fig. 5 in Richtung der Pfeile 37 nach oben steigen, um durch die Öffnungen 4 in die Gassammelkammer 5 zu gelangen.

Die Entlüftungsvorrichtung 1 soll möglichst universell einsetzbar sein. Hierzu gehört, daß sie in Rohrleitungen beziehungsweise hydraulische Anlagen und Systeme aller Art einbaubar sein soll, ohne daß dort besondere Maßnahmen hinsichtlich der Strömungsrichtung am Einbauort ergriffen werden müßten. Hierzu ist vorgesehen, daß das Einlaßelement 24 und das Auslaßelement 25 relativ zum Gehäuse 21 der Entlüftungsvorrichtung 1 lageveränderbar angeordnet sind.

Aus praktischen Gründen liegen das Einlaßelement 24 und das Auslaßelement 25 in Achsrichtung 38 hintereinander. Einlaßelement 24 und Auslaßelement 25 besitzen ein gemeinsames Gehäuse 28. Das Gehäuse 28 besitzt einen Dichtrand 39, der ringförmig ist und zu einem ebenfalls ringförmigen Dichtrand 40 des Gehäuses 21 der Entlüftungsvorrichtung 1 paßt. Der Dichtrand 40 des Gehäuses 21 umschließt den auslaßseitigen Ringraum 18. In dem Ringraum 18 ist einströmseitig der Diffusor 3 konzentrisch längs der Achse 41 angeordnet, Das Einlaßelement 24 schließt mit konzentrischer Passung an den zentralen Diffusor 3 an, wie es beispielsweise Fig. 5 zeigt. Das Auslaßelement 25 schließt an den Ringraum 18 an. Die Dichtränder 39, 40 beider Gehäuse 28, 21 sind mit wählbarer wechselseitiger Winkelstellung durch Verbindungsmittel miteinander verbunden.

Diese Verbindungsmittel bestehen aus einer im Profil V-förmigen Schelle 30, die durch eine Schraubverbindung 42 gegen die Dichtränder 39, 40 angepreßt ist. Die Abdichtung ist durch einen eingelegten Dichtring 43 gewährleistet.

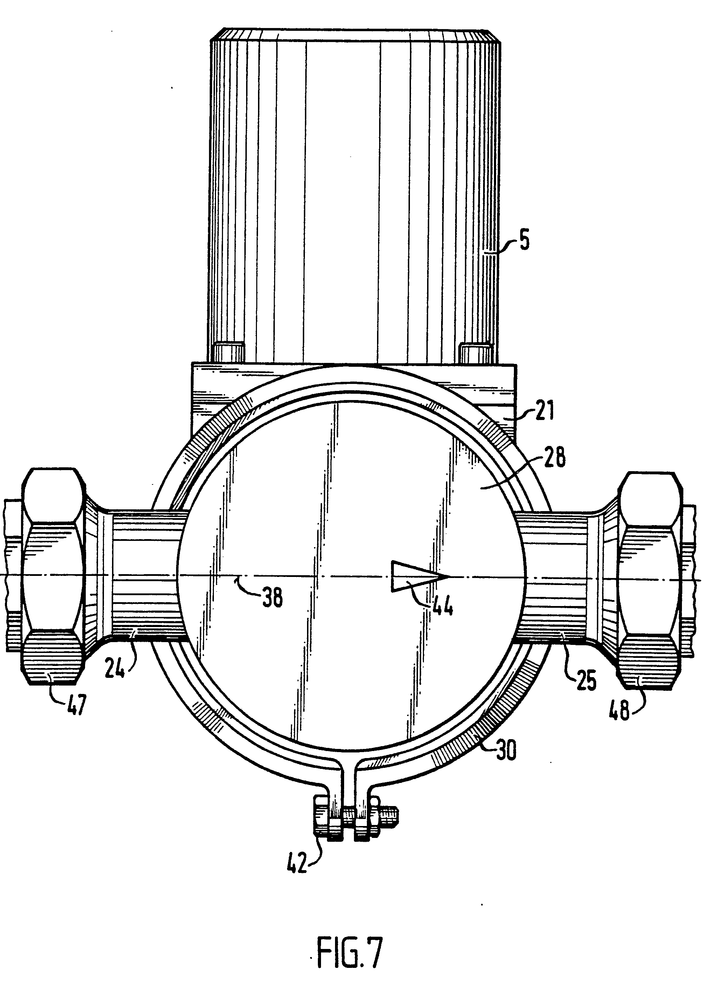

Nach Lösen der Schraubverbindung 42 können die Dichtränder 39, 40 gegeneinander verschoben werden, so daß beispielsweise das Gehäuse 28 gegen das Gehäuse 21 aus der in Fig. 1 dargestellten Lage heraus in die in Fig. 7 dargestellte Lage, bei der der Strömungspfeil 44 um 90 Grad geschwenkt ist, gebracht werden kann. Danach kann die Schraubverbindung 42 wieder festgezogen werden.

Bei dem vorliegenden Ausführungsbeispiel besitzt das Einlaßelement 24 ein Außengewinde 45 und das Auslaßelement 25 ein Außengewinde 46. Zu den Außengewinden passen Rohrverschraubungen 47 beziehungsweise 48, mit deren Hilfe die Entlüftungsvorrichtung 1 gemäß Fig. 1 an Rohre 49, 50 angeschlossen werden kann.

**Patentansprüche**

1. Entlüftungsvorrichtung für ein gasbefrachtetes, strömendes flüssiges Medium, versehen mit einer vorzugsweise automatisch entlüftbaren, nach unten hin geöffneten Gassammelkammer (5), wobei das Medium durch ein mit seitlichen Öffnungen versehenes, eine Verminderung der Strömungsgeschwindigkeit hervorrufendes, als Diffusor (3) ausgebildetes Rohr geführt ist, dessen seitliche Wandöffnungen so groß bemessen sind, daß Gasblasen durch sie hindurch austreten können, dadurch gekennzeichnet, daß der Diffusor (3) etwa waagerecht unter der Gassammelkammer (5) angeordnet ist, daß die Gasblasen (27) aus dem Diffusor (3) in einen ihn umgebenden Raum (15) und von dort erst in die Gassammelkammer (5) aufsteigen können, daß vor dem Ende des Diffusors (3) mit Abstand von diesem eine Prallfläche (13) derartig angeordnet ist, daß zwischen dem Diffusorende (12) und der Prallfläche (13) eine die Strömungsgeschwindigkeit heraufsetzende Engstelle (14) ausgebildet ist.

2. Entlüftungsvorrichtung nach Anspruch 1, dadurch gekennzeichnet, daß die Wandöffnungen des Diffusors (3) als Längsschlitze (2) ausgebildet sind.

3. Entlüfungsvorrichtung nach einem der Ansprüche 1 oder 2, dadurch gekennzeichnet, daß der den Diffusor (3) umgebende Raum (15) der Rückleitung des Mediums im Gegenstrom dient und zumindest abströmseitig einen größeren Strömungsquerschnitt als der Diffusor (3) besitzt.

4. Entlüftungsvorrichtung nach einem der Ansprüche 1 bis 3, dadurch gekennzeichnet, daß der den Diffusor (3) umgebende Raum als Ringdiffusor (15) ausgebildet ist.

5. Entlüftungsvorrichtung nach einem der Ansprüche 1 bis 4, dadurch gekennzeichnet, daß der den Diffusor (3) umgebende Raum beziehungsweise Ringsdiffusor (15) an der Abströmseite eine Prallwand (19) aufweist.

6. Entlüftungsvorrichtung nach Anspruch 5, dadurch gekennzeichnet, daß die Prallwand (19) den Raum beziehungsweise Ringdiffusor (15) abschließt und in ihrem unteren Bereich (22) mindestens eine Öffnung (23) für das abströmende Medium aufweist, deren Lage so gewählt ist, daß sie von Gasblasen nur gegen den Widerstand ihrer Auftriebskräfte passiert werden kann.

7. Entlüftungsvorrichtung nach einem der Ansprüche 1 bis 6, dadurch gekennzeichnet, daß ein Einlaßelement (24) und/oder ein Auslaßelement (25) für das Medium relativ zum Gehäuse (21) der Entlüftungsvorrichtung (1) lageveränderbar angeordnet ist.

8. Entlüftungsvorrichtung nach Anspruch 7, dadurch gekennzeichnet, daß das Gehäuse (21) der Entlüftungsvorrichtung (1) abströmseitig einen mit einem ringförmigen Dichtrand (40) versehenen Ringraum (18) aufweist, in dem einströmseitig der Diffusor (3) konzentrisch angeordnet ist, daß Einlaßelement (24) und Auslaßelement (25) ein gemeinsames Gehäuse (28) besitzen, das einen zum Dichtrand (40) des Gehäuses (21) der Entlüftungsvorrichtung (1) passenden Dichtrand (39) aufweist, daß das Einlaßement mit konzentrischer Passung an den Diffusor (3) anschließt, daß das Auslaßelement (25) an den Ringraum (18) anschließt und daß die Dichtränder (39, 40) beider Gehäuse (28, 21) mit wählbarer wechselseitiger Winkelstellung durch Verbindungsmittel (30) miteinander verbunden sind.

9. Entlüftungsvorrichtung nach Anspruch 8, dadurch gekennzeichnet, daß das einströmseitige Ende (31) des Diffusors (3) frei drehbar in eine sich im Gehäuse (28) der Einlaß- und Auslaßelemente (24, 25) befindende Bohrung (32) eingepaßt und an seiner Stirnfläche (33) gegen das Gehäuse (28) abgedichtet ist.

## Claims

1. Air-discharge device for a gas-laden, flowing, liquid medium, provided with a preferably automatically air-dischargeable, rearwardly opened gas collection chamber (5), where the medium is conducted through a tube formed as diffusor (3), provided with lateral openings and effecting a reduction of the speed of flow, the lateral wall openings of which tube are of such large dimensions that gas bubbles can escape through them, characterised in that the diffusor (3) is arranged approximately horizontally under the gas collection chamber (5), in that the gas bubbles (27) can rise out of the diffusor (3) into a space (15) surrounding it and only thence into the gas collection chamber (5), in that a baffle face (13) is arranged before the end of the diffusor (3) with spacing therefrom in such a way that a constriction (14) stepping up the speed of flow is formed between the diffusor end (12) and the baffle face (13).

2. Air-discharge device according to claim 1, characterised in that the wall openings of the diffusor (3) are formed as longitudinal slots (2).

3. Air-discharge device according to one of claims 1 or 2, characterised in that the space (15) surrounding the diffusor (3) serves for conducting the medium back in counter-current and possesses, at least on the downstream side, a larger flow cross-section than the diffusor (3).

4. Air-discharge device according to one of claims 1 to 3, characterised in that the space surrounding the diffusor (3) is formed as annular diffusor (15).

5. Air-discharge device according to one of claims 1 to 4, characterised in that the space or annular diffusor (15) surrounding the diffusor (3) comprises a baffle wall (19) on the outflow side.

6. Air-discharge device according to claim 5, characterised in that the baffle wall (19) closes the space or annular diffusor (15) and comprises in its lower region (22) at least one opening (23) for the outflowing medium, the position of which opening is so selected that it can be passed by gas bubbles only against the resistance of their buoyancy forces.

7. Air-discharge device according to one of claims 1 to 6, characterised in that an inlet element (24) and/or an outlet element (25) for the medium is/are arranged with variable position in relation to the housing of the air-discharge device (1).

8. Air-discharge device according to claim 7, characterised in that the housing (21) of the air-discharge device (1) comprises on the outflow side an annular space (18) provided with an annular sealing edge (40), in which space the diffusor (3) is arranged concentrically on the inflow side, in that the inlet element (24) and the outlet element (25) possess a common housing (28) which comprises a sealing edge (39) fitting the sealing edge (40) of the housing (21) of the air-discharge device (1), in that the inlet element adjoins the diffusor (3) with concentric fit, in that the outlet element (25) adjoins the annular space (18) and in that the sealing edges (39, 40) of the two housings (28, 21) are connected with one another by connection means (30), with selectable mutual angle position.

9. Air-discharge device according to claim 8, characterised in that the inflow end (31) of the diffusor (3) fits freely rotatably into a bore (32) situated in the housing (28) of the inlet and outlet elements (24, 25) and is sealed off at its end face (33) against the housing (28).

## Revendications

1. Dispositif de purge d'air pour un fluide liquide s'écoulant, transporté par un gaz, comportant un collecteur de gaz (5) ouvert vers le bas, à purge de préférence automatique, le fluide étant guidé à travers un tube se présentant sous la forme d'un diffuseur (3), présentant des ouvertures latérales, entraînant une réduction de la vitesse d'écoulement, dont les ouvertures latérales pratiquées dans la paroi sont suffisamment grandes pour pouvoir laisser passer les bulles de gaz, caractérisé en ce que le diffuseur (3) est placé à peu près horizontalement sous le collecteur de gaz (5), en ce que les bulles de gaz (27) peuvent monter du diffuseur (3) dans un volume (15) l'entourant, et de là dans le collecteur de gaz (5), en ce qu'une surface de rebondissement (13) est placée devant l'extrémité du diffuseur (3), à une certaine distance de celui-ci, en ce qu'un goulot d'étranglement (14) augmentant la vitesse d'écoulement, est formé entre l'extrémité du diffuseur (12) et la surface de rebondissement (13).

2. Dispositif de purge d'air selon la revendication 1, caractérisé en ce que les ouvertures pratiquées dans la paroi du diffuseur (3) sont des fentes longitudinales (2).

3. Dispositif de purge d'air selon l'une des revendications 1 ou 2, caractérisé en ce que le volume (15) entourant le diffuseur (3) sert à renvoyer le fluide à contre-courant, et présente une section tranversale d'écoulement, au moins côté sortie, plus grande que le diffuseur (3).

4. Dispositif de purge d'air selon l'une des revendications 1 à 3, caractérisé en ce que le volume entourant le diffuseur (3) est un diffuseur annulaire (15).

5. Dispositif de purge d'air selon l'une des revendications 1 à 4, caractérisé en ce que le volume entourant le diffuseur (3), ou le diffuseur annulaire (15), comporte une paroi de rebondissement (19) côté sortie.

6. Dispositif de purge d'air selon la revendication 5, caractérisé en ce que la paroi de rebondissement (19) ferme le volume ou le diffuseur annulaire (15), et comporte dans sa zone (22) inférieure, au moins une ouverture (23) pour le fluide sortant, dont la position est choisie de telle sorte qu'elle ne puisse être traversée par les bulles de gaz, qu'à l'encontre de la résistance de leurs forces de poussée.

7. Dispositif de purge d'air selon l'une des revendications 1 à 6, caractérisé en ce qu'un élément d'entrée (24) et/ou un élément de sortie (25) du fluide, est disposé de manière à ce que sa position puisse varier par rapport au boîtier (21) du dispositif de purge d'air (1).

8. Dispositif de purge d'air selon la revendication 7, caractérisé en ce que le boîtier (21) du dispositif de purge d'air (1) comporte un volume annulaire (18) pourvu côté sortie, d'un bord d'étanchéité (40) annulaire, dans lequel est disposé concentriquement le diffuseur (3), côté sortie, en ce que l'élément d'entrée (24) et l'élément de sortie (25) ont un boîtier (28) commun, qui comporte un bord d'étanchéité (39) ajusté au bord d'étanchéité (40) du boîtier (21) du dispositif de purge d'air (1), en ce que l'élément d'entrée est ajusté de manière concentrique au diffuseur (3), en ce que l'élément de sortie (25) se raccorde au volume annulaire (18), et en ce que les bords d'étanchéité (39, 40) des deux boîtiers (28, 21) sont assemblés entre eux par des moyens de liaison (30), sous une position angulaire réciproque à choisir.

9. Dispositif de purge d'air selon la revendication 8, caractérisé en ce que l'extrémité (31) côté entrée du diffuseur (3) est ajustée de manière à tourner librement dans un perçage (32) pratiqué dans le boîtier (28) des éléments d'entrée et de sortie (24, 25), et est rendue étanche sur sa face frontale (33), par rapport au boîtier (28).

FIG. 1

FIG. 2

FIG.3

FIG. 4

FIG. 5

FIG. 6

FIG.7